# EUROPEAN PATENT APPLICATION

(11) **EP 3 670 475 A1**
(43) Date of publication of application: **24.06.2020**
(21) Application number: 18846532.2
(22) Date of filing: 01.08.2018
(51) Int. Cl.: C04B 35/52, C04B 35/634, C04B 35/622, C04B 35/626, H01M 4/587, H01M 10/0525

(54) **METHOD FOR PRODUCING NEGATIVE ELECTRODE ACTIVE MATERIAL FOR LITHIUM SECONDARY BATTERY, AND LITHIUM SECONDARY BATTERY INCLUDING SAME**

(30) Priority: 17.08.2017 KR 20170104302
(71) Applicant: POSCO Chemical Co., Ltd, Gyeongsangbuk-do (KR); Research Institute of Industrial Science & Technology, Pohang-si, Gyeongsangbuk-do 37673 (KR); Posco Chemtech, Pohang-si, Gyeongsangbuk-do 37918 (KR)
(72) Inventor: AN, Jung-Chul, Pohang-si Gyeongsangbuk-do 37671 (KR); PARK, Sei Min, Pohang-si Gyeongsangbuk-do 37655 (KR); LEE, Jae Eun, Pohang-si Gyeongsangbuk-do 37695 (KR); KIM, Byoung Ju, Pohang-si Gyeongsangbuk-do 37671 (KR); YOU, Seung Jae, Pohang-si Gyeongsangbuk-do 37655 (KR); KIM, Hyoung Geun, Pohang-si Gyeongsangbuk-do 37918 (KR); LEE, Sang Eun, Pohang-si Gyeongsangbuk-do 37918 (KR); LEE, Chan Woo, Cheonan-si Chungcheongnam-do 31156 (KR); JO, Hyun-Chul, Pohang-si Gyeongsangbuk-do 37759 (KR); KIM, Myung Ki, Pohang-si Gyeongsangbuk-do 37835 (KR)
(74) Representative: Potter Clarkson
(86) International application number: PCT/KR2018/008762
(87) International publication number: WO 2019/035580

(57) **Abstract**

Presented is a method for producing a negative electrode active material which has a high discharge capacity, high charge-discharge efficiency, and excellent high-output characteristics, and which experiences only a small volume change during charging/discharging. A method for producing a negative electrode active material for a lithium secondary battery according to an embodiment of the present invention includes: a step for producing primary particles by pulverizing a carbon raw material containing 4 to 10 wt% of volatile matters; a step for producing secondary particles by mixing the primary particles with a binder; and a step for producing a graphite material by graphitizing the secondary particles.

## Description

### BACKGROUND OF THE INVENTION

### (a) Field of the Invention

The present disclosure relates to a method for producing a negative electrode active material for a lithium secondary battery, and a lithium secondary battery including the same.

### (b) Description of the Related Art

Recently, batteries have acquired high capacity because of an increase of power consumption caused by high performance and function integration of portable electronic devices such as cellular phones or tablet PCs, and particularly, as high-output power for hybrid electric vehicles (HEV) or electric vehicles (EV), and the necessity of secondary batteries having high-output characteristics of an excellent charging and discharging speed is substantially increasing. Further, as the usage time increases, a period of charging and discharging the battery reduces, so a substantial improvement of the cycle lifespan of the battery is needed, and minimization of the volume change (expansion and contraction) of the battery caused by deterioration of the battery material is gaining attention as a major necessary characteristic.

Lithium secondary batteries are widely used because of merits of a high energy density and a high voltage from among the secondary batteries, and commercial lithium secondary batteries generally adopt a metal oxide-based positive active material and a carbon-based negative electrode active material such as graphite.

The graphite that is a negative electrode active material is classified into natural graphite processed by mining the same from a mine and undergoing physical selection and high purification, and synthetic graphite acquired by processing coke and treating the coke at a high temperature, the coke being a carbon solid that is obtained by performing a heat treatment on organic materials such as coal or petroleum residues.

A natural graphite-based negative electrode material is more advantageous than the synthetic graphite in configuring a high-capacity battery, but a capacity reducing degree caused by progressing the charging and discharging cycle is disadvantageous. As the natural graphite generally has a crystalline (or plate) shape, it is generally processed to have a spheroidized shape and is then used so as to increase a packing density and improve an output characteristic when an electrode is produced. When crystalline graphite is spheroidized, milling is generally used, and it is known that capacity is reduced and the lifespan characteristic is deteriorated when the battery is repeatedly charged and discharged, because of a stress increase and defects in the graphite particles generated by the corresponding process.

On the other hand, capacity of synthetic graphite is somewhat disadvantageous compared to natural graphite and the synthetic graphite is expensive because of a production process cost, but its lifespan characteristic is relatively longer so it is spotlighted as a material of a battery for a portable electronic device focusing on the long life characteristic, and it is quickly replacing natural graphite. In general, coal, petroleum-based residues, or pitches that are processed goods are produced by a carbonization and high-temperature heat treatment (or graphitization) process so as to produce a synthetic graphite negative electrode material, and a graphitizing and heat-treating process is applied by adding a small amount of a material for allowing a catalyst graphitizing reaction. A composite negative electrode material in a mixed form of natural graphite and synthetic graphite may be used so as to supplement the drawbacks of both the materials depending on application goals.

For example, a process for producing a negative electrode material with high-capacity, high-output, and long-lifespan characteristics through a catalyst graphitizing heat treatment using a catalyst material added after composing spheroidized natural graphite and synthetic graphite powder is proposed. In addition, a process for mixing coke that is a raw material of synthetic graphite and spheroidized natural graphite, combining them, and finally producing a negative electrode material through a graphitizing heat treatment is proposed. A method for respectively coating natural graphite and synthetic graphite with a pitch material, and carbonizing them to form a carbonaceous layer on a surface, adding a catalyst, mixing them, and finally producing a composite negative electrode material through a graphitizing heat treatment is used.

In general, to produce a high-capacity synthetic graphite material, a graphitizing degree is increased by maintaining the graphitizing heat treatment at a high temperature, or a heat treatment is performed by adding a catalyst material so as to induce a catalyst graphitizing reaction. To improve charging and discharging efficiency, a method for minimizing exposure of a graphite edge on the surface of particles by coating a synthetic graphite surface or grinding particles, and suppressing excessive formation of a passivated film produced by decomposition of an electrolyte solution, may also be used. To improve high-speed charging and discharging performance, alignment of the graphite particles in the synthetic graphite processed goods may be irregularly controlled, or a carbonaceous coating may be applied to the surface of particles. To reduce the change of the material and the electrode volume of synthetic graphite according to charging and discharging, a method for allowing the alignment of graphite particles in the synthetic graphite processed goods to be irregular, or improving numerical stability in a charging and discharging reaction by increasing strength of the material, is also used. In addition to be above-noted cases, various technical developments are in progress for improving performance of a battery material of synthetic graphite, but in general, trade-off relationships exist among performance, so when specific performance is improved, other performance is deteriorated. For example, when a catalyst is introduced during a producing process and a catalyst graphitizing heat treatment is performed so as to increase the capacity, side effects that porosity rates on the inside and the surface of synthetic graphite increase by the pores produced when the catalyst is thermally decomposed, and the lifespan characteristic of the battery is deteriorated by the increase of negative reactivity of the BET (Brunauer, Emmett, Teller) of the material and an electrolyte solution. When a diffusion distance of lithium ions is reduced by reducing the size of particles of synthetic graphite, the high-speed charging and discharging characteristic may be improved but the lifespan of the battery also reduces by the increase of the BET induced from the small particle size. When a negative electrode material in a secondary particle form having condensed the particles with a small diameter and combined the same is formed so as to suppress the change of the material and the electrode volume generated during the charging and discharging, the material volume change caused by the charging and discharging is offset by the primary particles having irregular alignment in the secondary particles, and the total electrode volume change reduces as a merit. However, side effects that irregular alignment of the particles is insufficient according to a processing form of unit primary particles or a secondary particle processing condition, the BET increases or the secondary particle shape is not even, reduction of an expansion rate of the material and the electrode according to the charging and discharging is insufficient, and the lifespan of the battery reduces, may be generated.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a method for producing a negative electrode active material with high discharge capacity, high charge-discharge efficiency, an excellent high-output characteristic, and a small volume change during charging and discharging.

An exemplary embodiment of the present invention provides a method for producing a negative electrode active material for a lithium secondary battery, including: a step for producing primary particles by pulverizing a carbon raw material containing 4 to 10 wt% of volatile components; a step for producing secondary particles by mixing the primary particles with a binder; and a step for producing a graphite material by graphitizing the secondary particles.

The carbon raw material may include a green coke or a raw coke.

A particle diameter of D50 of the primary particles may be equal to or less than 10 µm.

Sphericity of the primary particles may be 0.75 to 1.

The method may further include a step for grinding the primary particles after the step for producing primary particles.

The method may further include a step for raising a temperature of the primary particles at a rate of 1 to 10 °C/min after the step of producing primary particles.

The method may further include a step for removing a volatile matter in the primary particles by heat-treating the primary particles after the step for producing primary particles.

A heat treatment temperature may be 800 to 1500 °C in the step for removing a volatile matter in the primary particles.

The binder at 2 to 20 parts by weight may be mixed with the primary particles at 100 parts by weight in the step for producing secondary particles.

The binder may include a coal pitch or a petroleum pitch.

The binder may have a softening point of 80 to 300 °C.

The step for producing secondary particles may be performed for one to five hours at a temperature of 110 to 500 °C.

A particle diameter D50 of the secondary particles may be 14 to 25µm.

The method may further include a step for carbonizing the secondary particles after the step for producing secondary particles.

The carbonization step may be performed at a temperature of 800 to 1500 °C.

The step for producing a graphite material may be performed at a temperature of 2800 to 3200 °C.

The graphite material may have a BET that is equal to or less than 1.7 m²/g and tab density that is equal to or greater than 0.7 g/cc.

Another embodiment of the present invention provides a lithium secondary battery including: a positive electrode; a negative electrode; and an electrolyte, wherein the negative electrode includes a negative electrode active material for a lithium secondary battery produced by the above-described method.

When the negative electrode active material for a lithium secondary battery produced by the producing method according to the present invention is used, the discharging capacity and the initial charging and discharging efficiency are high. Concurrently, the electrode expansion rate according to charging and discharging is low, and the high-speed discharging characteristic is improved.

### BRIEF DESCRIPTION OF THE DRAWINGS

FIG. 1 shows a flowchart of a method for producing a negative electrode active material for a lithium secondary battery according to an exemplary embodiment of the present invention.
FIG. 2 shows a photograph of primary particles that are pulverized and ground in Example 1 taken through a scanning electron microscope (SEM).
FIG. 3 shows a photograph of a negative electrode active material produced in Example 1 taken through a scanning electron microscope (SEM).
FIG. 4 shows a photograph of primary particles pulverized in Example 3 taken through a scanning electron microscope (SEM).
FIG. 5 shows a photograph of primary particles pulverized and ground in Comparative Example 1 taken through a scanning electron microscope (SEM).

### DETAILED DESCRIPTION OF THE EMBODIMENTS

It will be understood that, although the terms first, second, third, etc. may be used herein to describe various elements, components, regions, layers, and/or sections, they are not limited thereto. These terms are only used to distinguish one element, component, region, layer, or section from another element, component, region, layer, or section. Thus, a first element, component, region, layer, or section discussed below could be termed a second element, component, region, layer, or section without departing from the teachings of the present invention.

The technical terms used herein are to simply mention a particular exemplary embodiment and are not meant to limit the present invention. An expression used in the singular encompasses an expression of the plural, unless it has a clearly different meaning in the context. In the specification, it is to be understood that terms such as "including", "having", etc., are intended to indicate the existence of specific features, regions, numbers, stages, operations, elements, components, or combinations thereof disclosed in the specification, and are not intended to preclude the possibility that one or more other specific features, regions, numbers, operations, elements, components, or combinations thereof may exist or may be added.

Unless otherwise defined, all terms used herein, including technical or scientific terms, have the same meanings as those generally understood by those with ordinary knowledge in the field of art to which the present invention belongs. Such terms as those defined in a generally used dictionary are to be interpreted to have the same meanings as contextual meanings in the relevant field of art, and are not to be interpreted to have idealized or excessively formal meanings unless clearly defined in the present application.

Further, in the present specification, a particle diameter D50 signifies the size of particles when active material particles with various particle sizes are accumulated up to 50 % of a volume ratio.

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention.

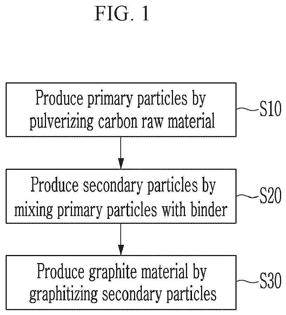

FIG. 1 shows a flowchart of a method for producing a negative electrode active material for a lithium secondary battery according to an exemplary embodiment of the present invention. The flowchart of the method for producing a negative electrode active material for a lithium secondary battery of FIG. 1 exemplifies the present invention, and the present invention is not limited thereto. Therefore, the method for producing a negative electrode active material for a lithium secondary battery is modifiable in various ways.

As shown in FIG. 1, a method for producing a negative electrode active material for a lithium secondary battery includes: a step S10 for producing primary particles by pulverizing a carbon raw material including 4 to 10 wt% of a volatile matter, a step S20 for producing secondary particles by mixing the primary particles with a binder, and a step S30 for producing a graphite material by graphitizing the secondary particles. In addition, if necessary, the method for producing a negative electrode active material for a lithium secondary battery may further include other steps.

First, in step S10, the carbon raw material including 4 to 10 wt% of volatile matter is pulverized to produce primary particles. Here, the volatile matter generally represents an organic compound with a low molecular weight that remains and is not carbonized into a solid from among carbon raw materials, and it signifies the component that may be changed into vapor when heated in an inactive atmosphere, and it may be separated from the carbon raw material. In an exemplary embodiment of the present invention, the carbon raw material including a predetermined amount of the volatile matter is provided as a start material. When a carbon raw material including no volatile matter or a little thereof is used, for example, when calcined or carbonized coke is used as the carbon raw material, the surface of the particles becomes harsh and exposure of a fracture surface increases in the pulverizing step S10. The BET of the finally produced negative electrode active material increases, the tab density reduces, so the electrode expansion rate increases, and the high-speed discharging characteristic is deteriorated. On the contrary, when there is a large amount of the volatile matter in the carbon raw material, affinity of the particle surface and the binder material may be reduced in the producing of secondary particles, so there may be a limit in increasing the particle diameter of the produced secondary particles, and the particle pore rate and the BET may be increased because of generation of pores on the inside and the surface of particles according to generation of excessive volatile matter in the heat treatment step after producing the secondary particles.

In detail, the carbon raw material may include green coke or raw coke. The green coke or raw coke may produce coal, petroleum-based residues, or pitches that are processed goods through a caulking reaction in a high-pressure and high-temperature condition. Anisotropic or needle coke with high carbonaceous tissue alignment in a one-axis direction is obtained or isotropic or pitch coke with low carbonaceous tissue alignment is obtained according to the raw material composition and the caulking process condition. Green or raw represents a state obtained after the caulking process, and it signifies a state not undergoing a heat treatment such as calcination or carbonization and thereby including a predetermined rate of volatile matter. In the present specification, a heat-treated product having removed the volatile matter by calcining or carbonizing the green coke or the raw coke will be referred to as calcined coke.

The particle diameter D50 of the primary particles pulverized in the step S10 may be equal to or less than 10 µm. When the particle diameter D50 of the primary particles is very large, the particle diameter of the secondary particles produced by using the same may excessively increase or a number of the primary particles configuring the unit secondary particle may become very small. In further detail, the particle diameter D50 of the primary particles may be 3 to 8 µm.

As described above, the carbon raw material including a volatile matter is pulverized in the step S10, so the primary particles with low roughness may be produced. Further, the carbon raw material including a volatile matter is pulverized in the step S10, so the primary particles with a high spherical shape degree may be produced. In this instance, the spherical shape degree is a numerical expression of how close the particles are to the spherical shape, and it signifies that it is similar to the spherical shape as it approaches 1. In detail, the primary particles with spherical shape degree of 0.75 to 1 may be produced. When the spherical shape degree of the primary particles produced by step S10 is insufficient, a step for grinding the primary particles may be further included. When the spherical shape degree of the primary particles satisfies an appropriate range, the tab density increases, the electrode expansion rate reduces, and the high-speed discharging characteristic becomes excellent. Devices for the grinding process are not specifically limited, and a general pulverizer or a modified pulverizer for allowing improvement of spheroidization effects and differential distribution is usable.

In the step S10, the pulverizer for pulverizing the carbon raw material is not specifically limited. In detail, a jet-mill, a roller mill, or a continuous or batch-type pulverizer for performing air classification simultaneously with pulverizing is usable.

After the step S10, a step for raising a temperature of the primary particles at a rate of 1 to 10 °C/minute may be further included. The primary particles having undergone the step S10 exist at room temperature (10 to 30 °C). It is needed to undergo a temperature raising step after the step S10 so as to raise the temperature up to a heat treatment temperature for removing the volatile matter in the primary particles. In an exemplary embodiment of the present invention, the discharging capacity of the negative electrode active material may be further included by controlling the temperature raising speed in the temperature raising step. In detail, the temperature raising speed may be 1 to 10 °C/min. When the temperature raising speed is very high, a continuum for regularly attacking a graphite plane or crystallinity is reduced, so the discharging capacity may be deteriorated.

After the step S10, a step for removing the volatile matter in the primary particles by performing a heat treatment on the primary particles may be further included.

The heat treatment temperature may be 800 to 1500 °C. When the heat treatment temperature is very low, the volatile matter may not be properly removed. When the heat treatment temperature is very high, the effect of removing the volatile matter may be the same but an equipment configuration and a driving cost may be substantially increased.

The primary particles may include the volatile matter that is equal to or less than 0.5 wt% through the heat treatment step.

In the step S20, the primary particles are mixed with a binder to produce secondary particles. The secondary particles signify the particles formed by condensing the primary particles.

In detail, in the step S20, the binder at 2 to 20 parts by weight may be mixed with the primary particles at 100 parts by weight. When the amount of the binder is very small, the binding effect is less and fluent secondary particles may not be generated. When the amount of the binder is very large, the capacity and the lifespan characteristic of the battery may be reduced. The binder may include a coal pitch or a petroleum pitch. A pitch-based material has a merit of having excellent wettability with the surface of the raw material carbon material and easily forming a dense adhering interface, compared to a polymer-based binder, and it has a merit of having a high yield of carbonization or graphitization after performance of a heat treatment, and may be easily and inexpensively obtained. The binder may have a softening point of 80 to 300 °C. When the softening point is very low, a binding force is low, so it is difficult to combine the primary particles and form the secondary particles, and a carbonization yield is low and it may be difficult to realize an economical production process. On the contrary, when the softening point is very high, the temperature for driving the equipment for fusion of the binder material is high, so the cost of production equipment increases, and thermal modification and carbonization of some samples according to a high-temperature use may proceed.

The step S20 may be performed for one to five hours at a temperature of 110 to 500 °C. When the temperature is very low or the time is very short, uniform mixture of the primary particles and the binder may be difficult. When the temperature is very high or the time is very long, modification of the pitch (oxidation and thermal modification) progresses by excessive overheating, so the drawback that the capacity and efficiency characteristic in which the produced graphite material is manifested after the heat treatment process is finished may be generated.

The particle diameter D50 of the secondary particles produced in step S20 may be 14 to 25 µm. When the particle diameter D50 of the secondary particles is very small, the BET of the negative electrode active material excessively increases and the battery efficiency may be reduced. On the contrary, when the particle diameter D50 of the secondary particles is very large, the tab density is excessively lowered, and it is difficult to form an electrode layer with appropriate electrode density, so it may be difficult to form an electrode secondary battery for generating appropriate battery performance. In further detail, the particle diameter D50 of the secondary particles may be 16 to 23 µm.

The particle diameter D50 may be controlled by a mixing ratio of the primary particles and the binder, and the temperature, the time, and the binder of step S20.

The equipment for performing step S20 is not specifically limited, and it may be performed when a mixture in a high-viscosity paste form is put into a device for mixing the same at a high temperature. In further detail, the primary particles and the binder are uniformly mixed by using a device for generating a shearing force, such as a pair of rotating blades, and they are combined, and they are input to a device for producing a mixture in a high-viscosity paste form.

When the particle diameter D50 of the secondary particles produced in the step S20 is very large, the grain size may be adjusted by pulverizing the same by use of a pin mill. The revolutions per minute (rpm) of the pulverizer may be controlled so as to control the appropriate grain size of the condensed powder. However, it is not limited thereto, and various pulverizers may be used to achieve the target grain size.

After step S20, a step for carbonizing the secondary particles may further be included. Through this, the volatile matter is removed from the binder, and is then induced to thermal decomposition, solidification, and a change to carbon. The carbonizing step may be performed at the temperature of 800 to 1500 °C. An atmosphere gas may use an inert gas, and a nitrogen or argon atmosphere is allowable. The carbonizing step may be performed for thirty minutes to five hours.

In the step S30, a graphite material is produced by graphitizing the secondary particles. The step S30 may be performed at the temperature of 2800 to 3200 °C. A device for performing the step S30 is not specifically limited, and an Acheson furnace is usable. In general, the graphitization may be performed according to a working method by the Acheson furnace without additional use of atmosphere gas, and when the atmosphere gas is used, the inert gas is usable, and it may be performed in the nitrogen or argon atmosphere. The step S30 may be performed for thirty minutes to twenty days.

The graphite material having finished the step S30 may undergo a depulverizing or pulverizing process and may be atomized.

The negative electrode active material for a lithium secondary battery produced according to an exemplary embodiment of the present invention has a small BET and high tab density, so the electrode layer has high density and increases energy density. In detail, the negative electrode active material for a lithium secondary battery produced according to an exemplary embodiment of the present invention may have BET that is equal to or less than 1.7 m²/g and tab density that is equal to or greater than 0.7 g/cc. In further detail, the BET may be 0.8 to 1.6 m²/g, and the tab density may be 0.8 to 1.0 g/cc.

Another exemplary embodiment of the present invention provides a lithium secondary battery including: a positive electrode; a negative electrode; and an electrolyte, wherein the negative electrode includes a negative electrode active material produced by the above-described method.

In detail, the electrolyte may further include at least one electrolyte additive selected from among fluoro ethylene carbonate (FEC), vinylene carbonate (VC), ethylene sulfonate (ES), and combinations thereof.

This is because the cycle characteristic may be further improved by additionally applying an electrolyte additive such as the FEC, and a stable solid electrolyte interface (SEI) may be formed by the electrolyte additive. This fact will be supported through examples to be described.

The characteristics of the negative electrode active material and the corresponding lithium secondary battery are identical to the above-provided description. Further, the configuration of the battery excluding the negative electrode active material is known to a person skilled in the art. Therefore, no detailed descriptions thereof will be provided.

Examples of the present invention, comparative examples corresponding to the same, and experimental examples will now be described. However, the examples described below are exemplary embodiments of the present invention, and the present invention is not limited to the examples.

### Example 1

Green coke (about 5.0 wt% of the content of VM) that is a coal-based premium needle coke product is used as a carbon raw material. The green coke is pulverized for the first time by using an air classifying mill so that D50 may be 7 µm, so the primary particles are produced. The pulverized particles are additionally ground by using a pulverizer-type crushing device to which an air classifying device is attached, and D50 of the primary particles is 7.5 µm.

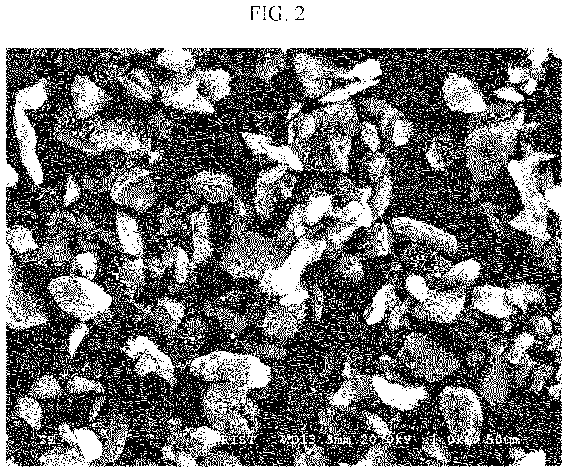

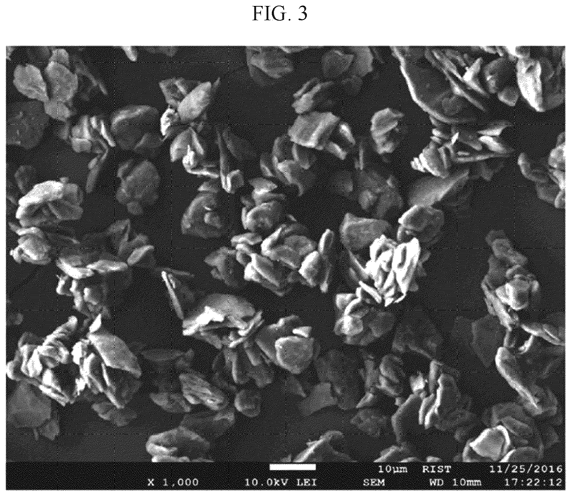

FIG. 2 shows a SEM photograph of primary particles.
The temperature of the primary particles is raised by controlling the temperature raising speed at 5 °C/min, and the volatile matter is removed by performing a heat treatment for an hour in a nitrogen atmosphere at 1200 °C. The obtained primary particles are mixed with pitch with a softening point of 120 °C at a weight ratio of 100:10, and they are mixed for two hours by using a mixer that may be heated to thus produce secondary particles. In this instance, D50 of the secondary particles is 19.5 µm. They are carbonized for an hour in the nitrogen atmosphere at 1200 °C, their temperature is raised to 3000 °C, and they are graphitized for an hour to thus produce a negative electrode active material. FIG. 3 shows a SEM photograph of the finally produced negative electrode active material.

### Example 2

Except for the omission of the heat treatment step for removing the volatile matter in Example 1, the negative electrode active material is produced according to the same method as Example 1.

### Example 3

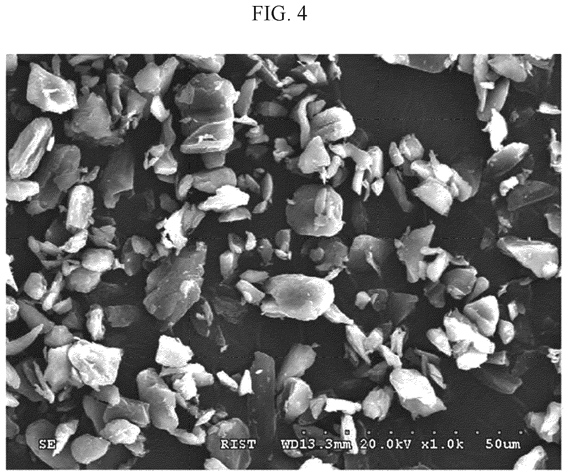

Except for the omission of the grinding process in Example 1, the negative electrode active material is produced according to the same method as Example 1. FIG. 4 shows a SEM photograph of the primary particles during the production process in Example 3.

### Example 4

Except that the weight ratio of the primary particles and the pitch in Example 1 is 100:20, the negative electrode active material is produced according to the same method as Example 1.

### Example 5

Except that D50 is 10 µm after the primary particles are pulverized and ground in Example 1, the negative electrode active material is produced according to the same method as Example 1.

### Example 6

Except that D50 is 5.5 µm after the primary particles are pulverized and ground in Example 1, the negative electrode active material is produced according to the same method as Example 1.

### Example 7

Except for controlling the temperature raising speed to be 20 °C/min after the primary particles are pulverized and ground in Example 1, the negative electrode active material is produced according to the same method as Example 1.

### Comparative Example 1

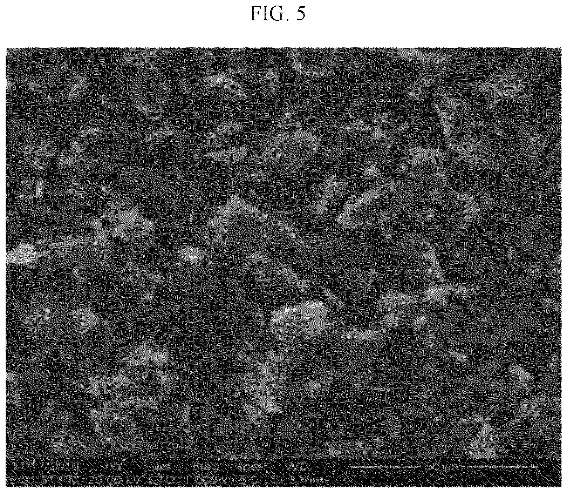

Except for omitting the step for using the raw material coke not as the green coke used in Example 1 but as the calcined coke (about 0.25 wt% of the content of VM) and carbonizing the primary particles, the negative electrode active material is produced according to the same method as Example 1. FIG. 5 shows a scanning electron microscope (SEM) photograph of pulverized and ground primary particles. As shown in FIG. 2, FIG. 4, and FIG. 5, it is found that the broken particle side of the primary particles in Example 1 and Example 3 is not sharp compared to the primary particles of Comparative Example 1, but it has the shape of the primary particles that is similar to the relatively smooth oval shape. It is found that the harshness of the pulverized and ground primary particles of Example 1 is further reduced compared to the pulverized primary particles as in Example 3.

### Comparative Example 2

Except that the weight ratio of the calcined coke and the pitch is 100:20 in Comparative Example 1, the negative electrode active material is produced according to the same method as Comparative Example 1.

### Comparative Example 3

Except that D50 is 10 µm after the primary particles are pulverized and ground in Comparative Example 1, the negative electrode active material is produced according to the same method as Comparative Example 1.

### Experimental Example 1: Measurement on BET and particle diameter D50

The BET and the particle diameter D50 of the negative electrode active material produced in Example 1 to Example 7 and Comparative Example 1 to Comparative Example 3 are measured and summarized in Table 1. The BET is measured according to the nitrogen adsorption method.

**(Table 1)**

| | BET (m²/g) | Tab density (g/cc) | Particle diameter D50 (µm) DELETEDTEXTS |
|---|---|---|---|
| Example 1 | 1.38 | 0.9 | 19.5 |
| Example 2 | 1.46 | 0.87 | 19.1 |
| Example 3 | 1.68 | 0.83 | 18.7 |
| Example 4 | 1.21 | 0.85 | 20.6 |
| Example 5 | 1.26 | 0.85 | 22.1 |
| Example 6 | 2.13 | 0.98 | 15.3 |
| Example 7 | 1.57 | 0.89 | 19.2 |
| Comparative Example 1 | 2.05 | 0.83 | 18.6 |
| Comparative Example 2 | 1.88 | 0.83 | 19.9 |
| Comparative Example 3 | 1.58 | 0.8 | 21.8 |

When the primary particles are acquired as in Example 1 and Example 2, it is found that the tab density of the negative electrode active material generated by undergoing the pulverizing and grinding step is high and the BET is low. Further, it is found that as the particle diameter of the primary particles increases, the BET of the produced negative electrode active material reduces, and the particle diameter of the negative electrode active material that is made into the secondary particles increases in proportion. As the tab density of the negative electrode active material increases, the high density of the electrode layer and the increase of energy density may be expected, so it is found that the current result may be effectively used in producing the high-capacity negative electrode active material.

### Experimental Example 2: Producing lithium secondary battery (or half-cell), and initial discharging capacity and efficiency measurement

The negative electrode active material produced in Example 1 to Example 7 and Comparative Example 1 to Comparative Example 3, the binder (carboxy methyl cellulose and styrene butadiene rubber), and the conductive material (Super P) are uniformly mixed by use of distilled water as a solvent so that the weight ratio thereof may be 97:2:1 (described in order of the negative electrode active material: the binder: the conductive material).

The mixture is uniformly applied to a copper (Cu) current collector, it is compressed by a roll press, and it is vacuum-dried for twelve hours in a vacuum oven at 100 °C to produce the negative electrode. In this instance, the electrode density is set to be 1.4 to 1.6 g/cc.

Lithium metal (Li-metal) is used as an opponent electrode, and a solution in which a 1 mol solution of LiPF₆ is dissolved into a mixed solvent with a volume ratio of ethylene carbonate (EC): dimethyl carbonate (DMC) of 1:1 is used as an electrolyte solution.

The respective constituent elements are used, and a CR 2032 half coin cell is produced according to a conventional production method.

A battery is driven under the condition of 0.1C, 5 mV, 0.005C cut-off charging and 0.1C 1.5 V cut-off discharging, and initial discharging capacity and efficiency are measured and are summarized in Table 2.

**(Table 2)**

| | Discharging capacity (mAh/g) | Efficiency (%) |
|---|---|---|
| Example 1 | 354 | 93.1 |
| Example 2 | 353 | 92.9 |
| Example 3 | 352 | 92.9 |
| Example 4 | 348 | 92.5 |
| Example 5 | 354 | 93.2 |
| Example 6 | 354 | 91.2 |
| Example 7 | 348 | 93 |
| Comparative Example 1 | 353 | 92 |
| Comparative Example 2 | 347 | 92.2 |
| Comparative Example 3 | 353 | 92.8 |

Referring to Table 2, green coke is used as a raw material as in Example 1, it undergoes the pulverizing and grinding step when the primary particles are obtained, and the discharging capacity and the efficiency of the battery are excellent in the condition in which the volatile matter is removed under the carbonization condition in which the temperature raising speed is relatively low.

Contrary to this, the discharging capacity of the negative electrode active material having removed the volatile matter is relatively reduced in the carbonization condition in which the temperature raising speed is relatively fast as in Example 7.

When the amount of the binder material used in the generation of secondary particles is increased as in Example 4, the discharging capacity of the produced negative electrode active material is reduced.

The efficiency of the battery is reduced when the size of the primary particles is reduced as in Example 6, and this is because the BET of the negative electrode active material is relatively high and a passivated film is actively formed.

### Experimental Example 3: Measurement of expansion rate and high-speed discharging characteristic

The battery is produced by the method described in Experimental Example 2.

The expansion rate was measured by driving the battery for ten cycles in the condition of 0.1C, 5 mV, 0.005C cut-off charging and 0.1C, 1.5 V cut-off discharging, and a thickness variation ratio of the electrode measured by disassembling the battery was calculated.

The discharging speed shows a relative value by measuring the battery capacity in the condition of 3C and 0.2C.

The expansion rate and the high-speed discharging characteristic are summarized in Table 3.

**(Table 3)**

| | Expansion rate (%) | High-speed discharging characteristic (%) |
|---|---|---|
| Example 1 | 45 | 87 |
| Example 2 | 39 | 88 |
| Example 3 | 48 | 84 |
| Example 4 | 51 | 88 |
| Example 5 | 43 | 77 |
| Example 6 | 56 | 93 |
| Example 7 | 46 | 87 |
| Comparative Example 1 | 58 | 80 |
| Comparative Example 2 | 49 | 74 |
| Comparative Example 3 | 50 | 70 |

Referring to Table 3, it is found that the high-speed discharging characteristic improves as the sizes of the pulverized primary particles and secondary particles are smaller, and the electrode expansion rate reduces as the size of the particles increases.

### Experimental Example 4: Measurement on high-speed charging characteristic

The battery is produced by the method described in Experimental Example 2.

Regarding the high-speed charge characteristic, the initial discharge capacity is determined in the condition of 0.1C, 5 mV, 0.005C cut-off charging and 0.1C, 1.5 V cut-off discharging, the charging rate (C-rate) is changed in the condition order of 0.1C, 0.2C, 0.5C, 1.0C, and 2.0C to repeat the charging and discharging cycle three times, respectively, and the relatively value is shown by measuring the battery charging capacity in the condition of 2C and 0.1C.

The high-speed charging characteristic is summarized in Table 4.

**(Table 4)**

| | High-speed charging characteristic (%) |
|---|---|
| Example 1 | 39.2 |
| Example 2 | 41.5 |
| Example 3 | 37.5 |
| Example 4 | 41.9 |
| Example 5 | 31.1 |
| Example 6 | 45.3 |
| Example 7 | 40.8 |
| Comparative Example 1 | 35.2 |
| Comparative Example 2 | 36.4 |
| Comparative Example 3 | 30.5 |

Referring to Table 4, as the size of the pulverized primary particles and the size of the secondary particles are smaller, the high-speed charge characteristic becomes better.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims. Therefore, the embodiments described above are only examples and should not be construed as being limitative in any respects.

## Claims

1. A method for producing a negative electrode active material for a lithium secondary battery, comprising:
a step for producing primary particles by pulverizing a carbon raw material containing 4 to 10 wt% of volatile components;
a step for producing secondary particles by mixing the primary particles with a binder; and
a step for producing a graphite material by graphitizing the secondary particles.

2. The method of claim 1, wherein
the carbon raw material includes a green coke or a raw coke.

3. The method of claim 1, wherein
a particle diameter of D50 of the primary particles is equal to or less than 10 µm.

4. The method of claim 1, wherein
sphericity of the primary particles is 0.75 to 1.

5. The method of claim 1, further comprising
a step for grinding the primary particles after the step for producing primary particles.

6. The method of claim 1, further comprising
a step for raising a temperature of the primary particles at a rate of 1 to 10 °C/min after the step of producing primary particles.

7. The method of claim 1, further comprising
a step for removing a volatile matter in the primary particles by heat-treating the primary particles after the step for producing primary particles.

8. The method of claim 7, wherein
a heat treatment temperature is 800 to 1500 °C in the step for removing a volatile matter in the primary particles.

9. The method of claim 1, wherein
the binder at 2 to 20 parts by weight is mixed with the primary particles at 100 parts by weight in the step for producing secondary particles.

10. The method of claim 1, wherein
the binder includes a coal pitch or a petroleum pitch.

11. The method of claim 1, wherein
the binder has a softening point of 80 to 300 °C.

12. The method of claim 1, wherein
the step for producing secondary particles is performed for one to five hours at a temperature of 110 to 500 °C.

13. The method of claim 1, wherein
a particle diameter D50 of the secondary particles is 14 to 25 µm.

14. The method of claim 1, further comprising
a step for carbonizing the secondary particles after the step for producing secondary particles.

15. The method of claim 14, wherein
the carbonization step is performed at a temperature of 800 to 1500 °C.

16. The method of claim 1, wherein
the step for producing a graphite material is performed at a temperature of 2800 to 3200 °C.

17. The method of claim 1, wherein
the graphite material has a BET that is equal to or less than 1.7 m²/g and tab density that is equal to or greater than 0.7 g/cc.

18. A lithium secondary battery comprising:
a positive electrode; a negative electrode; and an electrolyte,
wherein the negative electrode includes a negative electrode active material for a lithium secondary battery produced by a method according to any one of claim 1 to claim 17.
